# EUROPÄISCHE PATENTSCHRIFT

(11) **EP 2 354 316 B1**
(45) Veröffentlichungstag und Bekanntmachung des Hinweises auf die Patenterteilung: **07.11.2012**
(21) Anmeldenummer: 11153413.7
(22) Anmeldetag: 04.02.2011
(51) Int. Cl.: E01H 4/02, F16P 3/14, G08G 1/16

(54) **Pistenpflegefahrzeug**
Piste maintenance vehicle
Véhicule d'entretien de pistes

(30) Priorität: 05.02.2010 DE 102010007603
(43) Veröffentlichungstag der Anmeldung: 10.08.2011
(73) Patentinhaber: Kässbohrer Geländefahrzeug AG, 88471 Laupheim (DE)
(72) Erfinder: Betz, Peter, 88471, Baustetten (DE); Kuhn, Michael, 88480, Achstetten (DE); Rottmair, Jens, 55599, Siefersheim (DE)
(74) Vertreter: Patentanwälte Ruff, Wilhelm, Beier, Dauster & Partner

(56) Entgegenhaltungen:
- EP-B1- 1 255 895
- DE-A1- 4 120 596
- DE-A1-102004 040 136
- DE-A1-102006 040 537
- GB-A- 2 400 712
- US-A1- 2002 190 849
- US-B2- 7 141 796

## Beschreibung

### Anwendungsgebiet und Stand der Technik

Die Erfindung betrifft ein Pistenpflegefahrzeug mit einem Kettenantrieb und/oder mindestens einem Anbauaggregat zur Bearbeitung eines Untergrundes.

Derartige Pistenpflegefahrzeuge weisen üblicherweise einen Kettenfahrantrieb mit zwei Ketten auf, die auf Skipisten zur Fortbewegung des Fahrzeuges besonders gut geeignet sind. Solche Pistenpflegefahrzeuge weisen häufig auch Anbauaggregate wie insbesondere Schneefräsen auf, die insbesondere am Heck des Fahrzeuges angebracht sind und der Bearbeitung der Schneefläche dienen. Vergleichbare Anbauaggregate sind jedoch auch aus anderen Bereichen bekannt, beispielsweise von gattungsgemäßen Strandpflegefahrzeugen, bei denen die Anbauaggregate der Aufnahme von Sand dienen, um Verunreinigungen aus diesem zu beseitigen.

Bei den genannten Pistenpflegepflegefahrzeugen liegt eine besondere Problematik darin, dass diese Fahrzeuge mitunter in unmittelbarer Nähe zu Personen eingesetzt werden, denen die von einem Kettenfahrantrieb oder von Anbauaggregaten ausgehenden Gefahren nicht bewusst sind. Dies gilt insbesondere für Skifahrer und Snowboardfahrer, die ihrem Sport in der Nähe der Pistenpflegefahrzeuge nachgehen. Der Kettenfahrantrieb bzw. die beschriebenen Anbauaggregate können dem Wesen nach konstruktiv nur sehr schwer gekapselt werden, so dass die Gefahr besteht, dass die genannten Personen in Kontakt mit dem Kettenfahrwerk oder mit insbesondere rotierenden Teilen von Anbauaggregaten kommen und durch diese zu Schaden kommen.

Aus dem Bereich der Personenkraftwagen ist es bekannt, Sensoren zu verwenden, um Fußgänger zu erfassen, so dass der Fahrer dieser Personenkraftwagen rechtzeitig auf die Fußgänger aufmerksam gemacht wird, um sein Fahrzeug mit der dadurch gebotenen Vorsicht zu führen. Aus dem Bereich der Personenkraftwagen ist es darüber hinaus auch bekannt, dass Fahrzeuge mittels Sensoren einen kurz bevorstehenden Crash mit einem anderen Fahrzeug vorhersehen und in Reaktion darauf ein Bremsmanöver einleiten, um den Crash zu verhindern.

Anders als bei Personenkraftwagen liegt aufgrund der üblicherweise geringen Geschwindigkeit der gattungsgemäßen Pistenpflegefahrzeugen die Gefahrenquelle bei diesen nicht in der Geschwindigkeit des Fahrzeugs selbst, sondern stattdessen in der von außen zugänglichen Gestaltung des Kettenfahrwerks und/oder des Anbauaggregats in Verbindung mit der zum Teil hohen Geschwindigkeit von Personen. Da im Falle der Pistenpflegefahrzeuge üblicherweise die Bewegung dieser Personen, beispielsweise von Skifahrern, signifikant höher als die Geschwindigkeit des Pistenpflegefahrzeuges ist, ist das aus dem PKW-Bereich bekannte oben genannte Crashvermeidungs-System zunächst zwecklos, denn es liegt üblicherweise nicht in der Macht des Fahrzeugs bzw. seines Fahrzeugführers, einen Crash zu verhindern.

Weiterhin besteht bei Pistenpflegefahrzeugen die Problematik, dass diese bestimmungsgemäß auf Gelände abseits der Straßen eingesetzt werden. Hier kann es für den Fahrzeugführer schwer werden, Gefahren, die durch schwer einsehbares unebenes Gelände entstehen, richtig einzuschätzen. Dies gilt in besonderem Maße für Pistenpflegefahrzeuge, da diese häufig bei widrigen Wetterbedingungen in Form starken Schneetreibens betrieben werden, so dass Gefahren nur schwer erkennbar sind.

Aus der EP 1255895 B1 ist ein Pistenpflegefahrzeug bekannt, zu welchem eine Sensorik vorgeschlagen wird, die beispielsweise per Infrarot Lebewesen erkennt und gegebenenfalls den Fahrzeugführer warnt oder das Fahrzeug stoppt. Aus der DE 4120696 A1 sind Baumaschinen bekannt, die eine ähnliche Art von Sensorik aufweisen.

Aufgabe der Erfindung ist es, ein Pistenpflegefahrzeug dahingehend weiterzubilden, dass die Gefahr für den Fahrzeugführer und das Fahrzeug verringert wird, die sich aus gefährlichen Bodenkonturen wie Spalten und Abhängen ergibt.

### Aufgabe und Lösung

Erfindungsgemäß wird dies durch das Pistenpflegefahrzeug nach Anspruch 1 erreicht, das ein Sicherheitssystem aufweist, welches eine Sensoreinrichtung zur Erfassung von Personen und/oder von Bodenkonturen in der Umgebung des Fahrzeugs aufweist und welches dafür ausgebildet ist, die erfassten Bodenkonturen und/oder die erfassten Personen visualisiert auf einem Bildschirm im Führerstand des Fahrzeugs anzuzeigen.

Zusätzlich kann das Sicherheitssystem dafür ausgebildet sein, den Kettenfahrantrieb und/oder das Anbauaggregat bei Erfassung einer hierdurch gefährdeten Person zu deaktivieren und/oder ein optisches oder akustisches Warnsignal abzugeben, sofern eine durch das Fahrzeug gefährdete Person erfasst wird, wobei das Warnsignal derart ausgebildet ist, dass es durch die gefährdete Person erfassbar ist.

Ein erfindungsgemäßes Pistenpflegefahrzeug kann demnach durch die Sensoreinrichtung dazu befähigt sein, automatisiert den Kettenfahrantrieb und/oder das Anbauaggregat zu deaktivieren, um die Schädigung von Personen zu vermeiden, die in Kontakt mit dem Kettenfahrantrieb oder dem Anbauaggregat gelangen könnten. Die Gemeinsamkeit des Kettenfahrantriebs und des Anbauaggregats, die von außen offen zugänglichen bewegten Teile auf geringer Höhe über dem Boden, werden hinsichtlich ihrer Gefahr dadurch entschärft, dass sie zum Stillstand gebracht werden, wenn eine Gefahrensituation droht.

Das derart ausgebildete Sicherheitssystem ist bei einer solchen Ausgestaltung nicht primär dafür ausgebildet, einen drohenden Kontakt zu vermeiden, da dies in der Regel aufgrund der geringen Geschwindigkeit des Pistenpflegefahrzeugs und der vergleichsweise hohe Geschwindigkeiten der Personen, insbesondere Skifahrer, ohnehin nicht möglich ist. Stattdessen wird durch die Deaktivierung des Kettenfahrantriebs bzw. der Anbauaggregate die Verletzungsgefahr signifikant gesenkt. Eine Person, insbesondere ein Skifahrer, der mit dem Fahrzeug kollidiert, erleidet somit gegebenenfalls trotz des Sicherheitssystems Schäden durch den Aufprall selbst, es kommt jedoch nicht zu den schweren Verletzungen, die durch Einquetschungen zwischen Kettenband und Kettenrädern oder durch Kontakt mit den rotierenden Teilen einer Schneefräse und ähnlicher Anbauaggregate verursacht werden können.

Durch das zusätzliche oder alternative an die Umgebung gerichtete Warnsignal kann eine gefährdete Person, insbesondere ein Skifahrer, gewarnt werden, so dass er ggf. die Kollision noch vermeiden kann. Die Warnung erfolgt beispielsweise über eine Hupe, insbesondere mit einer Lautstärke von mindestens 80 Dezibel, vorzugsweise mindestens 100 Dezibel, oder über eine deutlich erkennbare und starke Warnlampe.

Das Sicherheitssystem hat vorzugsweise mehrere mögliche Reaktionsvarianten wie die Deaktivierung des Fahrantriebs, die differenzierte Deaktivierung eines oder mehrerer Anbauaggregate und die Abgabe eines Warnsignals. Vorzugsweise ist das Sicherheitssystem dafür ausgebildet, in Abhängigkeit der erfassten Gefahrenlage die jeweils passenden Reaktionsvarianten auszuwählen, wobei insbesondere auch die derzeitige Fahrsituation (Fahrtrichtung, Neigung des Untergrundes) des Fahrzeugs miteinbezogen werden kann. So ist bei einem talwärts arbeitenden Pistenpflegefahrzeug, in Richtung dessen ein Skifahrer talwärts fährt, die Deaktivierung der heckseitigen Schneefräse geboten, während der Fahrantrieb in Betrieb bleiben kann oder sogar sollte, um die relative Aufprallgeschwindigkeit zu verringern. Das Sicherheitssystem ist vorzugsweise zur Bewirkung einer solchen differenzierten Reaktion ausgebildet.

Weiterhin kann ein erfindungsgemäßes Fahrzeug durch die visualisierte Informationsvermittlung an den Fahrer hinsichtlich in der Umgebung befindlicher Personen oder der Bodenkonturen in der Umgebung des Fahrzeugs eine deutliche Gefahrenverringerung für den Fahrzeugführer und das Fahrzeug erreichen. Der Fahrer kann Personen, die sich im Umfeld des Fahrzeugs aufhalten, durch die auf einem Bildschirm dargestellten Informationen sicher erkennen und entsprechend hierauf reagieren. Insbesondere jedoch kann er durch die Visualisierung der Bodenkonturen die von Abhängen, Spalten und dergleichen ausgehende Gefahren erfassen und zweckmäßig reagieren. Dies ist bei gattungsgemäßen Pistenpflegefahrzeugen von großer Bedeutung, denn diese werden im alpinen Bereich eingesetzt, in dem es sehr plötzliche Änderungen der Witterung erforderlich machen können, das Fahrzeug auch noch führen, wenn das menschliche Auge kaum noch in der Lage ist, Konturen in der Umgebung des Fahrzeugs wahrzunehmen.

Insbesondere von Vorteil ist die Erfindung bei einem Pistenpflegefahrzeug mit einer Schneefräse. Gerade eine solche Schneefräse stellt eine besonders hohe Gefahr dar, da die an einer Schneefräse vorgesehene rotierende Walze zwangsläufig nach außen zumindest partiell ungeschützt ist. Es kann sich bei dieser Schneefräse beispielsweise um eine insbesondere heckseitige Schneefräse zur Erzeugung eines homogenen Untergrundes oder um eine insbesondere frontseitige Schneefräse zum Abtransport überschüssigen Schnees handelt. Ebenfalls von Vorteil ist die Erfindung in Hinblick auf ein Anbauaggregat, welches einen Ausleger mit gegenüber einem Hauptkörper des Auslegers angetriebenen beweglichen Bearbeitungselementen zur Herstellung einer Half-Pipe umfasst.

Die Verwendung an einem Pistenpflegefahrzeug ist weiterhin auch deshalb zweckmäßig, da gerade ein Pistenpflegefahrzeug durch seinen Einsatz im schneebedeckten Gebirge besonderen Gefahren ausgesetzt ist, denen durch eine erfindungsgemäße Ausgestaltung mit einer Sensoreinrichtung zur Erfassung von Bodenkonturen besonders gut begegnet werden kann.

Der Kettenfahrantrieb und das Anbauaggregat des Fahrzeugs können beispielsweise durch einen Verbrennungsmotor oder einen Elektromotor angetrieben sein. Besonders von Vorteil ist es jedoch, wenn der Kettenfahrantrieb oder das Anbauaggregat mittels eines Hydromotors angetrieben wird. Ein solcher Hydromotor ist in einen Hydraulikkreislauf mit einer Hydraulikpumpe eingebunden und setzt die über die Hydraulikflüssigkeit zugeführte Energie in mechanische Energie, insbesondere in eine Rotationsbewegung, um. Die Vorteilhaftigkeit der Verwendung eines solchen Hydromotors liegt in der besonderen Eignung zum sofortigen Bremsen. Sobald die Zufuhr von druckbeaufschlagter Hydraulikflüssigkeit unterbunden wird, kommen der Kettenfahrantrieb oder das Anbauaggregat unmittelbar zum Stillstand, ohne dass es separater Bremseinrichtungen bedarf.

Zur Erfassung von Personen und Bodenkonturen in der Umgebung des Pistenpflegefahrzeug umfasst die Sensoreinrichtung vorzugsweise auch eine Infrarotsensoreinrichtung und/oder eine Radareinrichtung.

Neben anderen bekannten Sensoreinrichtungen werden insbesondere diese Varianten als besonders vorteilhaft angesehen. Bei der Infrarotsensoreinrichtung handelt es sich vorzugsweise um eine Wärmebildkamera, die Personen auch erfassen kann, wenn diese sich nicht bewegen und beispielsweise nach einem Sturz auch für eine Lasersensoreinrichtung oder einer Radareinrichtung schwer zu erfassen sind. Insbesondere kann die Infrarotsensoreinrichtung auch derart ausgebildet/ausgerichtet sein, dass in unmittelbarer Nähe der Schneefläche befindliche oder sogar unter der Schneeoberfläche befindliche Personen erfasst werden. Die Lasersensoreinrichtung kann insbesondere auch als 3D-Lasersensoreinrichtung ausgebildet sein, die die Umgebung dreidimensional erfasst.

Da die genannten Typen von Sensoreinrichtungen jeweils Vor- und Nachteile haben, sind vorzugsweise mehrere von ihnen gemeinsam an einem Pistenpflegefahrzeug vorgesehen, wobei sie unterschiedliche oder auch überlappende Erfassungsbereiche aufweisen können. Die verschiedenen Typen von Sensoreinrichtungen können mit einer gemeinsamen Auswerteeinheit verbunden werden, die auf Basis der verschiedenen Eingangsdaten ein zuverlässiges Bild von einer möglichen Gefährdung von Personen zum Zwecke der weiteren Auswertung zeichnen kann.

Von besonderem Vorteil ist eine Gestaltung, bei der das Pistenpflegefahrzeug eine Infrarotsensoreinrichtung aufweist, deren Erfassungsbereich ausschließlich in Längsrichtung vor und/oder hinter dem Pistenpflegefahrzeug angeordnet ist und neben dem Fahrzeug einen toten Winkel aufweist, und wobei weiterhin das Pistenpflegefahrzeug eine Lasersensoreinrichtung, insbesondere eine 3D-Lasersensoreinrichtung, und/oder eine Radareinrichtung aufweist, deren Erfassungsbereich zumindest in Fahrzeugquerrichtung neben dem Pistenpflegefahrzeug angeordnet ist.

Eine solche Anordnung ermöglicht es, die Infrarotsensoreinrichtung lediglich auf Erfassungsbereiche zu richten, die vom Fahrzeug während seiner Fahrbewegung erreicht werden, um in diesen Bereichen auch die Verletzung von beispielsweise im Schnee liegenden oder aus anderen Gründen durch eine Radareinrichtung oder einer Lasersensoreinrichtung nicht erfassbare Personen zuverlässig zu erkennen. Die Lasersensoreinrichtung oder die Radareinrichtung erfasst zusätzlich dazu die Seitenbereiche des Fahrzeuges, so dass sich dort bewegende Personen erfasst werden können. In den Seitenbereichen liegende Personen, die lediglich für die Infrarotsensoreinrichtung erfassbar wären, sind für das Sicherheitssystem nicht von Interesse, da sie nicht gefährdet sind.

Insbesondere hinsichtlich der sich bewegenden Personen ist es von Vorteil, wenn die Auswerteelektronik deren Bewegungspfad extrapoliert, um zu erfassen, ob diese Personen mit dem Pistenpflegefahrzeug in Kontakt kommen könnten.

Die Auswerteelektronik der Steuereinrichtung ist dafür ausgebildet, den Kettenfahrantrieb oder das Anbauaggregat bei einer Personengefährdung zu deaktivieren. Vorzugsweise ist das Sicherheitssystem weiterhin dafür ausgebildet, eine audiovisuelle Warnmitteilung an den Fahrzeugführer abzugeben, beispielsweise in Form eines Warntons oder aber einer Einblendung auf der Instrumententafel oder einem Bildschirm des Fahrzeugs. Vorzugsweise erfolgt eine derartige audiovisuelle Warnmitteilung bereits bei einem geringeren Grad einer Personengefährdung, so dass eine sich zuspitzende Gefahrenlage zunächst lediglich mit einer derartigen audiovisuellen Warnmitteilung einhergeht und erst im Zuge der Zuspitzung die Deaktivierung des Kettenfahrantriebs und/oder des Anbauaggregats erfolgt. Eine solche Gestaltung gestattet es somit beispielsweise dem Fahrzeugführer des Pistenpflegefahrzeug, selbsttätig auf die Gefahrenlage einzugehen.

Erfindungsgemäß ist vorgesehen, dass das Fahrzeug eine Kamera zur optischen Erfassung der Umgebung aufweist, wobei das von dieser Kamera erfasste Bild auf dem Bildschirm im Führerstand angezeigt wird und wobei das auf dem Bildschirm dargestellte Bild um durch die Sensoreinrichtung erfasste Informationen ergänzt wird. Durch diese Gestaltung wird erreicht, dass dem Fahrzeugführer mögliche Gefahrenquellen in besonders anschaulicher Art und Weise verdeutlicht werden können, da diese direkt und an der korrekten Stelle in das Bild der Außenkamera eingeblendet werden, welches in etwa mit dem Blick des Fahrzeugführers durch die Windschutzscheibe übereinstimmt. Der Fahrer kann dadurch Personen oder mögliche durch die Bodenkonturen verursachte Gefahren gut lokalisieren. Hierdurch ist es dem Fahrzeugführer weiterhin möglich, auch bei widrigen Wetterbedingungen, wie insbesondere bei Schneetreiben, derartige Gefahrenquellen zu erkennen.

Die eingeblendeten Informationen stammen dabei zumindest auch von einer Lasersensoreinrichtung, können aber zusätzlich auch von einer Infrarotsensoreinrichtung stammen. Informationen der Infrarotsensoreinrichtung werden dabei vorzugsweise derart verarbeitet, dass die hierdurch erfassten Wärmequellen an der jeweils passenden Stelle in das Kamerabild eingeblendet werden, beispielsweise in Form roter Punkte oder dergleichen.

Die von der Lasersensoreinrichtung erfassten Bodenkonturen werden im auf dem Bildschirm dargestellten Bild eingeblendet. So können insbesondere auf dem Fahrweg bestehende Hindernisse wie beispielsweise Bäume oder Felsen von der Lasersensoreinrichtung erfasst werden und an der jeweils korrespondierenden Stelle im Bild der Kamera eingeblendet werden. Besonders von Vorteil ist es jedoch, wenn die Lasersensoreinrichtung dafür verwendet wird, Gefahrenstellen im Untergrund zu visualisieren. So können insbesondere Spalten im Boden sowie Abhänge und Abbrüche an den korrespondieren Stellen im Kamerabild eingeblendet werden. Vorzugsweise erfolgt diese Einblendung in einer Signalfarbe wie Rot, so dass sie sich deutlich von dem in der Kamera erfassten Bild abhebt.

Eine besonders vorteilhafte Gestaltung sieht dabei vor, dass die Lasersensoreinrichtung dafür ausgebildet ist, entlang einer Mehrzahl von sich linienförmig erstreckenden Messbereichen vor dem Pistenpflegefahrzeug die Entfernung eines Untergrundes zu erfassen, wobei im auf dem Bildschirm dargestellten Bild jene Punkte entlang dieser Messbereiche optisch besonders hervorgehoben werden, an denen ein Sprung in der erfassten Entfernung zu verzeichnen ist.

Bei dieser Gestaltung kann somit eine Lasersensoreinrichtung Verwendung finden, die keine vollständige dreidimensionale Erfassung des Bereichs vor dem Fahrzeug bietet, sondern lediglich entlang mehrerer streifenförmiger oder linienförmiger Messbereiche die Distanz zum Untergrund misst. Wenn in einem dieser Messbereiche ein plötzlicher Sprung in der Entfernung zu verzeichnen ist, beispielsweise um mehr als 3m oder um mehr als 5m, so ist dies ein Punkt, auf den der Fahrzeugführer hingewiesen werden sollte. Wenn beispielsweise der Laserstrahl so ausgerichtet ist, dass er den Untergrund vor dem Fahrzeug in etwa 15 Meter Entfernung trifft bzw. unter der Annahme eines ebenen Untergrundes treffen sollte, so stellt es eine potentielle Gefahrensituation dar, wenn nur in einem Teilbereich dieser etwa 15 Meter vor dem Fahrzeug befindlichen gedachten Linie ein Reflektionssignal zu erfassen ist, während über einen Teilabschnitt dieser Linie ein solches Reflektionssignal nicht mehr erfassbar ist oder - anhand der Laufzeit des Signals berechnet - aus einer Distanz von deutlich über 15 Meter, beispielsweise aus einer Distanz von 50 Metern kommt. Dies ist ein Indiz dafür, dass hier eine Unstetigkeit im Untergrund vorhanden ist, die für das Fahrzeug eine Gefahr darstellen kann.

Durch die mehreren Messbereiche, die sich vorzugsweise in etwa parallel zueinander vor dem Fahrzeug erstrecken, werden in der Praxis mehrere der genannten Punkte vom System erfasst, die alle einer gemeinsamen Besonderheit im Boden zuzurechnen sind, beispielsweise einer Abbruchkante. Statt der Darstellung nur eines Punktes dieser Abbruchkante je Messbereich, können diese Punkte auch durch interpolierte Linien miteinander verbunden werden, um dem Fahrzeugführer die Umgebung besser zu verdeutlichen. Auch können die durch die Fahrbewegung des Fahrzeugs immer neu hinzukommende Messwerte mit zuvor bereits aufgenommenen Messwerten verknüpft werden, um die Darstellung der Umgebung auf dem Bildschirm besonders aussagekräftig zu machen.

### Kurzbeschreibung der Zeichnungen

Weitere Aspekte und Vorteile der Erfindung ergeben sich außer aus den Ansprüchen auch aus der nachfolgenden Beschreibung eines bevorzugten Ausführungsbeispiels der Erfindung, welches anhand der Figuren schematisch erläutert wird. Dabei zeigen:
- Fig. 1: ein erfindungsgemäßes Pistenpflegefahrzeug in einer ersten Betriebssituation,
- Fig. 2: schematisch die Arbeitsweise der erfindungsgemäßen Sicherheitseinrichtung und
- Fig. 3 und 4a, 4b: ein erfindungsgemäßes Pistenpflegefahrzeug in einer zweiten Betriebssituation.

### Detaillierte Beschreibung der Ausführungsbeispiele

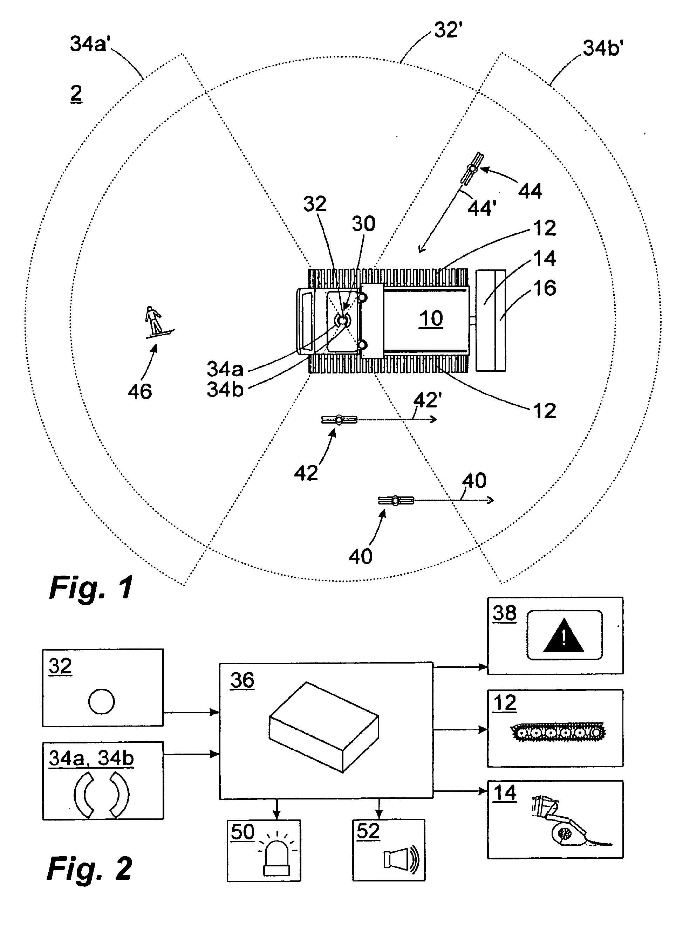

Fig. 1 zeigt ein erfindungsgemäßes Pistenpflegefahrzeug 10, welches auf einer Skipiste 2 eingesetzt ist. Das Pistenpflegefahrzeug 10 weist einen Kettenfahrantrieb mit zwei Ketten 12 auf. Am Heck des Pistenpflegefahrzeugs 10 ist exemplarisch eine Schneefräse 14 zur Verbesserung der Pistenqualität angebracht. Zusätzlich oder alternativ können weitere hier nicht näher beschriebene Anbauaggregate am Fahrzeug vorgesehen sein. Die genannte Schneefräse 14 umfasst eine in der Figur nicht dargestellte schnell rotierende Walze, die den durch die Kette verdichteten Schnee aufwirbelt und den aufgewirbelten Schnee anschließend durch einen auch "Finisher" genannten Glattdrücker 16 wieder zu einer Piste mit homogener Oberfläche niederdrückt.

Sowohl die Ketten 12 des Kettenlaufwerks als auch die Walze der Schneefräse 14 stellen eine erhebliche Gefahr für Personen dar, die in Kontakt mit ihnen kommen. Dabei geht die Gefahr weniger von der kinetischen Energie aus, mit der beispielsweise Skifahrer gegen die Ketten 12 oder die Schneefräse 14 prallen könnten. Vielmehr liegt die Gefahr darin, dass durch die enormen Kräfte, die an den Ketten 12 während des Fahrbetriebs des Fahrzeugs 10 wirken, und die hohe Energie, mit der die Walze der Schneefräse 14 angetrieben wird, Personen, die in Kontakt mit den Ketten 12 oder der Schneefräse 14 gelangen, schwere Schäden an ihren Gliedmaßen davontragen.

Um dies zu verhindern, weist das erfindungsgemäße Pistenpflegefahrzeug 10 ein in Fig. 2 hinsichtlich seines Funktionsablaufs schematisch dargestelltes Sicherheitssystem 30 auf. Dieses Sicherheitssystem 30 verfügt über eine Radareinrichtung 32 sowie nach vorne und nach hinten gerichtete Wärmebildkameras 34a, 34b.

Das Radarsystem 32 ist in der Lage, das Pistenpflegefahrzeug 10 allseitig zu überwachen und im überwachten Bereich 32' sich bewegende Personen zu erkennen. Die Wärmebildkameras 34a, 34b überwachen lediglich Bereiche 34a', 34b' vor und hinter dem Fahrzeug 10 und erkennen dort zusätzlich zu den bereits durch die Radareinrichtung 32 erfassbaren sich bewegenden und aufrechten Personen 40, 42, 44 auch Personen, die sich wie die Person 46 liegend im Schnee befinden oder gar von einer Schneeschicht überdeckt sind. Damit werden sowohl unbewegte Personen, die bei Nichterkennung vom Fahrzeug 10 überrollt werden könnten, als auch sich bewegende Personen, die gerade aufgrund ihrer Bewegung mit den Ketten 12 oder der Schneefräse 14 in Kontakt gelangen könnten, von der Radareinrichtung 32 und den Wärmebildkameras 34a, 34b gemeinsam zuverlässig erfasst.

Fig. 2 verdeutlicht die Funktionsweise des Sicherheitssystems 30. Kern des Sicherheitssystems 30 ist eine Auswerteeinheit 36 in Form eines Mikrocomputers. An dessen Eingängen sind die Radareinrichtung 32 und die Wärmebildkameras 34a, 34b angeschlossen. Die Auswerteeinheit 36 ist dadurch in der Lage, zu erkennen, ob Personen vor oder hinter dem Fahrzeug im Schnee liegen. Weiterhin ist die Auswerteeinheit über die Auswertung des Radarsystems 32 in der Lage, die sich bewegenden Skifahrer 40, 42, 44 zu erkennen und deren Bewegungspfad zu extrapolieren.

In Fig. 1 sind die jeweils extrapolierten Bewegungspfade 40', 42', 44' durch Pfeile verdeutlicht.

In Abhängigkeit der erfassten Personen 40 bis 46 und der Auswertung hinsichtlich der Gefährdungslage, erfolgt die Signalabgabe an Ausgänge der Auswerteeinheit 36. Abhängig von der Gefahrensituation kann die Auswerteeinheit 36 in der in Fig. 2 verdeutlichten Weise ein Warnsignal beispielsweise auf einen Bildschirm 38 abgeben, das Kettenlaufwerk stoppen, so dass die Ketten 12 zum Stillstand kommen, und/oder die Schneefräse 14 deaktivieren.

Bezogen auf die Personen 40 bis 46, die in Fig. 1 dargestellt sind, kann die Auswerteeinrichtung 36 beispielsweise folgendermaßen reagieren.

Der Skifahrer 40 ist aufgrund seiner Entfernung zum Fahrzeug 10 und aufgrund seines extrapolierten Bewegungspfades 40' nicht gefährdet. Obwohl also durch die Radareinrichtung 32 dieser Skifahrer erfasst wird, löst er keinerlei nach außen wirkende Reaktion der Auswerteeinrichtung 36 aus. Der Skifahrer 42 ist zwar an sich auch nicht gefährdet, da bei Zugrundelegung seines extrapolierten Bewegungspfades 42' keine Kollision mit dem Fahrzeug 10 zu befürchten ist. Da er sich jedoch nur wenige Meter neben dem Fahrzeug bewegt und eine plötzliche Richtungsänderung des Skifahrers 42 nicht ausgeschlossen werden kann, würde bereits dieser Skifahrer 42 zumindest zu einer visuellen Mitteilung auf dem Bildschirm 38 in der in Fig. 2 verdeutlichten Weise führen.

Der Skifahrer 44 ist akut gefährdet, da sein extrapolierter Bewegungspfad 44' unmittelbar in dem Bereich der rechtsseitigen Kette 12 führt. In einer solchen Situation würde die Auswerteeinrichtung 36 unmittelbar das Kettenlaufwerk stoppen und somit den Stillstand der Ketten 12 bewirken. Aufgrund der Tatsache, dass das Kettenlaufwerk des Fahrzeugs 10 hydrodynamisch angetrieben wird, tritt dieser Stillstand auch ohne eine separate Notbremseinrichtung sehr schnell ein, so dass beim vorliegenden Ausführungsbeispiel die Ketten 12 nach maximal einer Sekunde still stehen. Ebenso wichtig ist die sofortige Deaktivierung der Schneefräse 14, insbesondere da die kritische Situation, in der sich der Skifahrer 44 befindet, dazu führen kann, dass dieser bei einem Ausweichmanöver in den Bereich der Schneefräse 14 gelangt.

Auch die Erfassung des im Schnee liegenden Skifahrers 46 würde unmittelbar eine Deaktivierung des Kettenlaufwerks mit den Ketten 12 und somit einen Stillstand des Fahrzeugs 10 bewirken, um zu verhindern, dass der Skifahrer 46 von dem Pistenpflegefahrzeug 10 überrollt wird.

Abhängig von der Gefahrensituation kann es im Einzelfall zumindest zunächst auch ausreichen, über ein nach außen gerichtetes Warnlicht 50 oder eine Warnhupe 52 die gefährdete Person zu warnen, um erst bei fortgesetzter Verschärfung der Gefahrensituation oben genannte Deaktivierung des Kettenfahrantriebs 12 und/oder der Schneefräse 14 einzuleiten.

Die Ausgangsdaten der Sensoreinrichtung mit der Radareinrichtung 32 und den Wärmebildkameras 34a, 34b dienen nicht nur dem Sicherheitssystem. Sie werden in nicht näher dargestellter Weise auch genutzt, um kombiniert mit einem die Umgebung erfassenden Kamerabild auf einem Bildschirm im Cockpit angezeigt zu werden und so der Sichtverbesserung zu dienen. Dadurch können beispielsweise durch die Kamera an sich nicht erkennbare Pistenbegrenzungen, Hindernisse und ähnliches in der Darstellung des Kamerabildes besonders hervorgehoben werden.

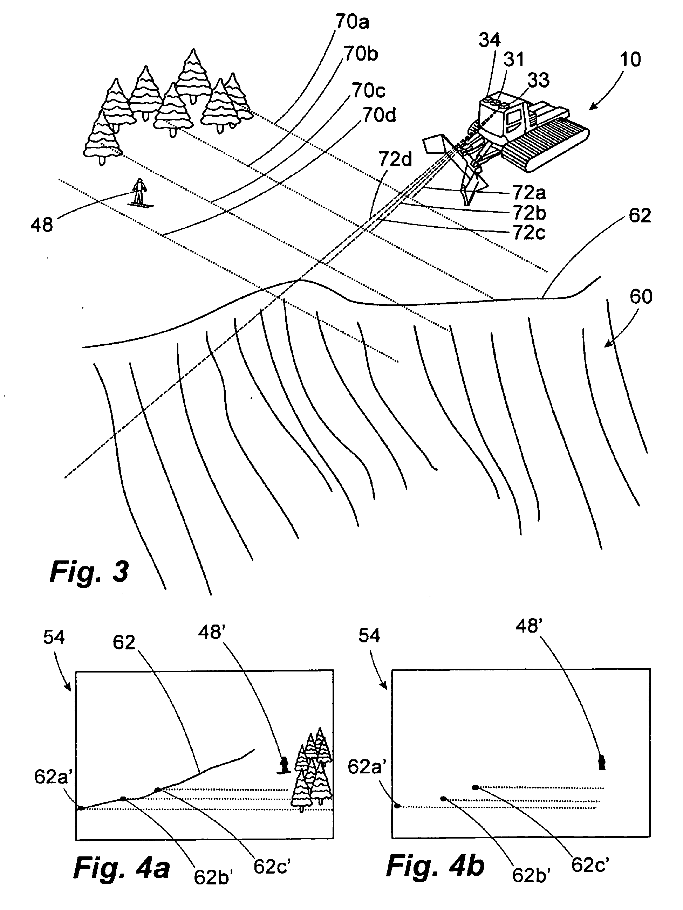

Die Figuren 3 sowie 4a und 4b verdeutlichen die Arbeitsweise eines erfindungsgemäßen Pistenpflegefahrzeugs anhand eines weiteren Beispiels.

Wie aus Figur 3 ersichtlich ist, befindet sich das in Vorwärtsfahrt befindliche Pistenpflegefahrzeug 10 in der hier dargestellten Situation im Bereich eines steilen Abhangs 60 und fährt in Richtung der Abbruchkante 62 dieses Abhangs 60. Weiterhin befindet sich auch in der Situation der Figur 3 ein Skifahrer 48 in der Umgebung des Fahrzeugs.

Das in Figur 3 dargestellte Pistenpflegefahrzeug 10 weist im Bereich eines Kabinendaches der Fahrzeugführerkabine eine nach vorne gerichtete Kamera 31 auf, die ein Bild erfasst, welches dem für den Fahrer mit bloßem Auge sichtbaren Bild in etwa entspricht. Weiterhin sind, jeweils in Fahrtrichtung ausgerichtet, eine Lasersensoreinrichtung 33 und eine Infrarotsensoreinrichtung 34 auf dem Kabinendach vorgesehen, wobei die Lasersensoreinrichtung 33 mittels eines oder mehrerer Laserstrahlen 72a-72d zur Erfassung der Umgebung genutzt wird. Diese Lasersensoreinrichtung 33 ist dafür ausgebildet, entlang in etwa horizontal ausgerichteter Messstreifen 70a bis 70d dem Abstand von Punkten auf diesen Messstreifen gegenüber dem Fahrzeug zu erfassen. Dies erfolgt beispielsweise, indem die Lichtlaufzeit durch Erfassung des reflektierten Lichtsignals ermittelt wird. Die in der Figur 3 dargestellten Laserstrahlen 72a bis 72d verdeutlichen das Prinzip.

Die von der Kamera 31, der Infrarotsensoreinrichtung 34 und der Lasersensoreinrichtung 33 erfassten Informationen werden mittels einer Auswerteeinheit in Form eines Computers auf einem Bildschirm 54 im Cockpit visualisiert. Figur 4a zeigt die Art der Visualisierung bei guten Sichtbedingungen. Wie in Figur 4a angedeutet ist, sind alle maßgeblichen Umgebungsgegebenheiten für den Fahrzeugführer bereits anhand der von der Kamera 31 erfassten Bilddaten gut zu erkennen, so dass die Gefahr für das Fahrzeug 10 und den Fahrer gering ist. Dennoch stellt auch bereits bei guter Sicht die zusätzliche Einblendung von Informationen der Lasersensoreinrichtung 33 für den Fahrer eine Hilfe dar, indem mittels beispielsweise rot hervorgehobener Punkte 62a', 62b', 62c' dem Fahrer verdeutlicht wird, wo in den streifenförmigen Messbereichen 70a bis 70d die Lasersensoreinrichtung einen Sprung in der erfassten Distanz oder gar ein Ausbleiben eines Reflektionssignals festgestellt hat. Da dies im Bereich der Abbruchkante 62 der Fall ist, wird dem Fahrzeugführer deren Lokalisierung erleichtert.

Insbesondere bei dem Anwendungsfall der Pistenpflegefahrzeuge ist dies von großem Wert, da es selbst bei guter Sicht häufig schwierig ist, abzuschätzen, ob weitgehend konturlose weiße Schneeflächen unmittelbar aneinander angrenzen oder durch einen für Mensch und Maschine gefährlichen Abhang oder Spalt voneinander getrennt sind.

Wie Figur 4b zeigt, bekommen die Sensordaten und deren Visualisierung insbesondere bei schlechter Sicht, beispielsweise bei starkem Schneetreiben, eine besondere Bedeutung. Wenn die Umgebung für den Fahrer bei einem Blick durch die Windschutzscheibe dann kaum noch erfassbar ist und auch die Informationen der Kamera 31 in gleichem Maße eingeschränkt sind, können die Lasersensoreinrichtung 33 und die Infrarotsensoreinrichtung 34 nach wie vor Auskunft über mögliche Gefahrenstellen in der Umgebung des Fahrzeugs liefern, seien es Abbruchkanten 62 oder Personen 48. Im Falle vollständiger Einschränkung der Sicht, verbleiben immer noch die von den Sensoreinrichtungen 33, 34 erfassten Informationen auf dem Bildschirm 54.

Die Kamera 31 oder auch eine zusätzliche Kamera kann weiterhin als Wärmebildkamera ausgebildet sein. Dies kann genutzt werden, um die Temperatur des Untergrundes zu erfassen. Es hat sich gezeigt, dass diese Temperatur sich durch Bearbeitung des Untergrundes erhöht, so dass eine Wärmebildkamera es dem Fahrzeugführer gestattet, auch bei dichtem Schnee festzustellen, welche Bereiche des Untergrundes bereits bearbeitet wurden. Die entsprechende Information kann gegebenenfalls ebenfalls in das Bild der Außenkamera 31 eingeblendet werden.

## Patentansprüche

1. Pistenpflegefahrzeug (10), mit
- einem Kettenfahrantrieb (12) und/oder
- mindestens ein Anbauaggregat (14) zur Bearbeitung eines Untergrundes (2),
**gekennzeichnet durch**
ein Sicherheitssystem (30), welches
- eine Sensoreinrichtung (32, 33, 34, 34a, 34b) zur Erfassung von Personen (40, 42, 44, 46) und/oder von Bodenkonturen (62) in der Umgebung des Pistenpflegefahrzeugs (10) mit mindestens einer Lasersensoreinrichtung (33) und
- eine Kamera (31) zur optischen Erfassung der Umgebung aufweist,
wobei das Sicherheitssystem dafür ausgebildet ist, die erfassten Bodenkonturen (62) und/oder die erfassten Personen (40, 42, 44, 46) visualisiert auf einem Bildschirm (54) im Führerstand des Pistenpflegefahrzeugs (10) anzuzeigen, wobei
- das von der Kamera (31) erfasste Bild auf dem Bildschirm (54) im Führerstand angezeigt wird, und
- die von der Lasersensoreinrichtung (33) erfassten Bodenkonturen (62) im auf dem Bildschirm (54) dargestellten Bild eingeblendet werden.

2. Pistenpflegefahrzeug nach Anspruch 1,
**dadurch gekennzeichnet, dass**
das Sicherheitssystem (30) dafür ausgebildet ist,
- den Kettenfahrantrieb (12) und/oder das Anbauaggregat (14) bei Erfassung einer hierdurch gefährdeten Person (44, 46) zu deaktivieren und/oder
- ein optisches oder akustisches Warnsignal abzugeben, sofern eine durch das Fahrzeug (10) gefährdete Person (44, 46) erfasst wird, wobei das Warnsignal (50, 52) derart ausgebildet ist, dass es durch die gefährdete Person (44, 46) erfassbar ist.

3. Pistenpflegefahrzeug nach Anspruch 1 oder 2,
**dadurch gekennzeichnet, dass**
das Pistenpflegefahrzeug (10) zumindest
- eine Schneefräse (14) und/oder
- einen Ausleger mit gegenüber einem Hauptkörper des Auslegers angetriebenen beweglichen Bearbeitungselementen zur Herstellung einer Half-Pipe
als Anbauaggregat (14) aufweist.

4. Pistenpflegefahrzeug nach einem der vorstehenden Ansprüche, **dadurch gekennzeichnet, dass**
der Kettenfahrantrieb (12) und/oder das Anbauaggregat (14) mittels eines Hydromotors angetrieben wird.

5. Pistenpflegefahrzeug (10) nach einem der vorstehenden Ansprüche,
**dadurch gekennzeichnet, dass**
die Sensoreinrichtung (32, 33, 34, 34a, 34b) neben der Lasersensoreinrichtung (33) auch
- eine Infrarotsensoreinrichtung (34, 34a, 34b) und/oder
- eine Radareinrichtung (32)
umfasst.

6. Pistenpflegefahrzeug nach Anspruch 5,
**dadurch gekennzeichnet, dass**
- das Pistenpflegefahrzeug (10) eine Infrarotsensoreinrichtung (34a, 34b) aufweist, deren Erfassungsbereich (34a', 34b') in Fahrzeuglängsrichtung vor und/oder hinter dem Pistenpflegefahrzeug (10) angeordnet ist, und
- das Pistenpflegefahrzeug (10) eine Lasersensoreinrichtung und/oder eine Radareinrichtung (32) aufweist, deren Erfassungsbereich (32') zumindest auch in Fahrzeugquerrichtung neben dem Pistenpflegefahrzeug (10) angeordnet ist.

7. Pistenpflegefahrzeug nach einem der vorstehenden Ansprüche,
**dadurch gekennzeichnet, dass**
das Sicherheitssystem (30) dafür ausgebildet ist, vor Deaktivierung des Kettenfahrantriebs (12) oder des Anbauaggregats (14) eine audiovisuelle Warnmitteilung an einen Fahrzeugführer abzugeben.

8. Pistenpflegefahrzeug nach einem der vorstehenden Ansprüche,
**dadurch gekennzeichnet, dass**
die Sensoreinrichtung (32, 33, 34, 34a, 34b) mindestens eine Infrarotsensoreinrichtung (34) aufweist und die mittels der Infrarotsensoreinrichtung (34) erfasste Wärmequellen im auf dem Bildschirm (54) dargestellten Bild eingeblendet werden.

9. Pistenpflegefahrzeug nach einem der vorstehenden Ansprüche, **dadurch gekennzeichnet, dass**
die Lasersensoreinrichtung (33) dafür ausgebildet ist, entlang einer Mehrzahl von sich linienförmigen erstreckenden Messbereichen (70a, 670b, 70c, 70d) vor dem Pistenpflegefahrzeug (10) die Entfernung eines Untergrundes zu erfassen, wobei im auf dem Bildschirm (54) dargestellten Bild jene Punkte (62a', 62b', 62c') entlang dieser Messbereiche (70a, 70b, 70c, 70d) optisch besonders hervorgehoben werden, an denen ein Sprung in der erfassten Entfernung zu verzeichnen ist.

10. Pistenpflegefahrzeug nach einem der vorstehenden Ansprüche, **dadurch gekennzeichnet, dass**
eine Auswerteeinheit (36) des Sicherheitssystems dafür ausgebildet ist, eine erfasste Gefahrensituation derart zu kategorisieren, dass in Abhängigkeit der Gefahrensituation eine der Maßnahmen
- Deaktivierung des Kettenfahrantrieb (12) und/oder das Anbauaggregat (14),
- Abgabe einer Warnmitteilung (38) an der Fahrzeugführer und/oder
- Abgabe eines Warnsignals (50, 52) an die gefährdete Person (44, 46)
ergriffen wird.

11. Pistenpflegefahrzeug nach einem der vorstehenden Ansprüche, **dadurch gekennzeichnet, dass**
eine Auswerteeinheit (36) des Sicherheitssystems dafür ausgebildet ist, anhand einer erfassten Gefahrensituation zu prüfen, von welchem Anbauaggregat (14) Gefahr ausgeht bzw. ob vom Kettenfahrantrieb (12) Gefahr ausgeht, und in Reaktion hierauf nur die gefährdenden Anbauaggregate (14) und/oder den gefährdenden Kettenantrieb (12) zu deaktivieren.

## Claims

1. Piste maintenance vehicle (10), having
- a propulsive track-laying drive (12) and/or
- at least one attachment unit (14) for processing a ground (2), and having a
- safety system (30) which comprises
- a sensor device (32, 33, 34, 34a, 34b) for detecting persons (40, 42, 44, 46) and/or ground contours (62) in the surroundings of the piste maintenance vehicle (10) with at least one laser sensor device (33), and
- a camera (31) for optically detecting the surroundings,
wherein the safety system is designed to display the detected ground contours (62) and/or the detected persons (40, 42, 44, 46) in visualized form on a screen (54) in the driver's cab of the piste maintenance vehicle (10), wherein
- the image recorded by the camera (31) is displayed on the screen (54) in the driver's cab, and
- the ground contours (62) detected by the laser sensor device (33) are superimposed in the image displayed on the screen (54).

2. Piste maintenance vehicle according to Claim 1, **characterized in that** the safety system (30) is designed
- to deactivate the propulsive track-laying drive (12) and/or the attachment unit (14) on detecting a person (44, 46) endangered thereby, and/or
- to emit an optical or acoustic warning signal if a person (44, 46) endangered by the vehicle (10) is detected, wherein the warning signal (50, 52) is designed in such a way that it can be registered by the endangered person (44, 46).

3. Piste maintenance vehicle according to Claim 1 or 2, **characterized in that** the piste maintenance vehicle (10) comprises at least
- one rotary snow plough (14) and/or
- one boom having movable processing elements driven with respect to a main body of the boom, to produce a half pipe
as attachment unit (14).

4. Piste maintenance vehicle according to one of the preceding claims, **characterized in that** the propulsive track-laying drive (12) and/or the attachment unit (14) is driven by means of a hydraulic motor.

5. Piste maintenance vehicle (10) according to one of the preceding claims, **characterized in that**, in addition to the laser sensor device (33), the sensor device (32, 33, 34, 34a, 34b) also comprises
- an infrared sensor device (34, 34a, 34b) and/or
- a radar device (32).

6. Piste maintenance vehicle according to Claim 5, **characterized in that**
- the piste maintenance vehicle (10) comprises an infrared sensor device (34a, 34b) whose detection range (34a', 34b') is arranged upstream and/or downstream of the piste maintenance vehicle (10) as viewed in the vehicle longitudinal direction, and
- the piste maintenance vehicle (10) comprises a laser sensor device and/or a radar device (32) whose detection range (32') is arranged at least also in the vehicle transverse direction alongside the piste maintenance vehicle (10).

7. Piste maintenance vehicle according to one of the preceding claims, **characterized in that** the safety system (30) is designed to emit an audiovisual warning message to a vehicle driver prior to deactivation of the propulsive track-laying drive (12) or the attachment unit (14).

8. Piste maintenance vehicle according to one of the preceding claims, **characterized in that** the sensor device (32, 33, 34, 34a, 34b) comprises at least one infrared sensor device (34) and the heat sources detected by means of the infrared sensor device (34) are superimposed in the image displayed on the screen (54).

9. Piste maintenance vehicle according to one of the preceding claims, **characterized in that** the laser sensor device (33) is designed to detect the distance of a ground along a plurality of linearly extending measuring regions (70a, 70b, 70c, 70d) in front of the piste maintenance vehicle (10), wherein in the image displayed on the screen (54) those points (62a', 62b', 62c') along these measuring regions (70a, 70b, 70c, 70d) at which a jump in the detected distance is to be registered are optically particularly emphasized.

10. Piste maintenance vehicle according to one of the preceding claims, **characterized in that** an evaluation unit (36) of the safety system is designed to categorize a detected risk situation in such a way that one of the following measures is taken depending on the risk situation:
- deactivation of the propulsive track-laying drive (12) and/or the attachment unit (14),
- emitting a warning message (38) to the vehicle driver and/or
- emitting a warning signal (50, 52) to the endangered person (44, 46).

11. Piste maintenance vehicle according to one of the preceding claims, **characterized in that** an evaluation unit (36) of the safety system is designed to check on the basis of a detected risk situation from which attachment unit (14) the risk emanates or whether the risk emanates from the propulsive track-laying drive (12), and in reaction thereto to deactivate only the endangering attachment units (14) and/or the endangering track-laying drive (12).

## Revendications

1. Dispositif d'entretien de pistes (10) comprenant :
- un entraînement de conduite à chaîne (12) et/ou
- au moins une unité rapportée (14) pour traiter un subjectile (2), et
- un système de sécurité (30),
- qui présente un dispositif de capteur (32, 33, 34, 34a, 34b) pour détecter des personnes (40, 42, 44, 46) et/ou des contours du sol (62) dans l'environnement du véhicule d'entretien de pistes (10), comprenant au moins un dispositif de capteur laser (33) et
- une caméra (31) pour la détection optique de l'environnement,
le système de sécurité étant réalisé de manière à indiquer les contours du sol détectés (62) et/ou les personnes détectées (40, 42, 44, 46) visualisés sur un écran (54) dans le poste de conduite du véhicule d'entretien de pistes (10),
- l'image acquise par la caméra (31) étant indiquée sur l'écran (54) dans le poste de conduite, et
- les contours du sol (62) détectés par le dispositif de capteur laser (33) étant incorporés dans l'image reproduite sur l'écran (54).

2. Véhicule d'entretien de pistes selon la revendication 1,
**caractérisé en ce que**
le système de sécurité (30) est réalisé
- de manière à désactiver l'entraînement de conduite à chaîne (12) et/ou l'unité rapportée (14) à la détection d'une personne (44, 46) mise en danger par ceux-ci, et/ou
- de manière à émettre un signal d'avertissement optique ou acoustique si une personne (44, 46) mise en danger par le véhicule (10) est détectée, le signal d'avertissement (50, 52) étant réalisé de manière à pouvoir être détecté par la personne (44, 46) mise en danger.

3. Véhicule d'entretien de pistes selon la revendication 1 ou 2,
**caractérisé en ce que**
le véhicule d'entretien de pistes (10) présente, en tant qu'unité rapportée (14) au moins:
- une fraise à neige (14) et/ou
- un bras de potence avec des éléments de traitement mobile entraînés par rapport à un corps principal du bras de potence pour créer un demi-tube.

4. Véhicule d'entretien de pistes selon l'une quelconque des revendications précédentes, **caractérisé en ce que**
l'entraînement de conduite à chaîne (12) et/ou l'unité rapportée (14) sont entraînés au moyen d'un moteur hydraulique.

5. Véhicule d'entretien de pistes (10) selon l'une quelconque des revendications précédentes, **caractérisé en ce que**
le dispositif de capteur (32, 33, 34, 34a, 34b) comprend, en plus du dispositif de capteur laser (33), également
- un dispositif de capteur infrarouge (34, 34a, 34b) et/ou
- un dispositif radar (32).

6. Véhicule d'entretien de pistes selon la revendication 5,
**caractérisé en ce que**
- le véhicule d'entretien de pistes (10) présente un dispositif de capteur infrarouge (34a, 34b) dont la plage de détection (34a', 34b') est disposée dans la direction longitudinale du véhicule devant et/ou derrière le véhicule d'entretien de pistes (10) et
- le véhicule d'entretien de pistes (10) présente un dispositif de capteur laser et/ou un dispositif radar (32) dont la plage de détection (32') est disposée au moins aussi dans la direction transversale du véhicule à côté du véhicule d'entretien de pistes (10).

7. Véhicule d'entretien de pistes selon l'une quelconque des revendications précédentes, **caractérisé en ce que**
le système de sécurité (30) est réalisé de manière à envoyer un avertissement audiovisuel à un conducteur du véhicule avant la désactivation de l'entraînement de conduite à chaîne (12) ou de l'unité rapportée (14).

8. Véhicule d'entretien de pistes selon l'une quelconque des revendications précédentes, **caractérisé en ce que**
le dispositif de capteur (32, 33, 34, 34a, 34b) présente au moins un dispositif de capteur infrarouge (34) et les sources de chaleur détectées au moyen du dispositif de capteur infrarouge (34) sont incorporées dans l'image reproduite sur l'écran (54).

9. Véhicule d'entretien de pistes selon l'une quelconque des revendications précédentes, **caractérisé en ce que**
le dispositif de capteur laser (33) est réalisé de manière à détecter, le long d'une pluralité de régions de mesure (70a, 70b, 70c, 70d) s'étendant de manière linéaire devant le véhicule d'entretien de pistes (10), la distance à un subjectile, chacun des points (62a', 62b', 62c') le long de ces régions de mesure (70a, 70b, 70c, 70d), au niveau desquelles un saut dans la distance détectée doit être consigné, étant mis en évidence optiquement de manière spécifique dans l'image reproduite sur l'écran (54).

10. Véhicule d'entretien de pistes selon l'une quelconque des revendications précédentes, **caractérisé en ce**
**qu'**une unité d'analyse (36) du système de sécurité est réalisée de manière à catégoriser une situation dangereuse détectée de telle sorte qu'en fonction de la situation dangereuse, l'une des mesures suivantes soit prise :
- désactivation de l'entraînement de conduite à chaîne (12) et/ou de l'unité rapportée (14),
- émission d'un avertissement (38) au conducteur du véhicule et/ou
- émission d'un signal d'avertissement (50, 52) à la personne en danger (44, 46).

11. Véhicule d'entretien de pistes selon l'une quelconque des revendications précédentes, **caractérisé en ce**
**qu'**une unité d'analyse (36) du système de sécurité est réalisée de manière à vérifier, à l'aide d'une situation dangereuse détectée, de quelle unité rapportée (14) provient le danger ou si le danger provient de l'entraînement de conduite à chaîne (12), et en réaction à cela, de manière à désactiver seulement les unités rapportées (14) et/ou l'entraînement à chaîne (12) à l'origine du danger.
